(19) **Europäisches Patentamt**
**European Patent Office**
**Office européen des brevets**

(11) **EP 2 428 009 B1**

(12) **EUROPÄISCHE PATENTSCHRIFT**

(45) Veröffentlichungstag und Bekanntmachung des Hinweises auf die Patenterteilung:
**30.01.2013 Patentblatt 2013/05**

(51) Int Cl.:
*H04L 25/02* (2006.01)        *H04L 25/03* (2006.01)
*H04L 27/26* (2006.01)        *H04L 1/06* (2006.01)

(21) Anmeldenummer: **10707843.8**

(22) Anmeldetag: **10.03.2010**

(86) Internationale Anmeldenummer:
**PCT/EP2010/001485**

(87) Internationale Veröffentlichungsnummer:
**WO 2010/127736 (11.11.2010 Gazette 2010/45)**

(54) **VERFAHREN UND VORRICHTUNG ZUR ERMITTLUNG VON SCHÄTZWERTEN FÜR SENDESYMBOLE IN EINEM MIMO-OFDM-SYSTEM**

METHOD AND DEVICE FOR DETERMINING ESTIMATED VALUES FOR TRANSMITTED SYMBOLS IN A MIMO-OFDM SYSTEM

PROCÉDÉ ET DISPOSITIF DE DÉTERMINATION DE VALEURS D'ESTIMATION POUR DES SYMBOLES D'ÉMISSION DANS UN SYSTÈME MIMO-OFDM

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.05.2009 DE 102009019894**

(43) Veröffentlichungstag der Anmeldung:
**14.03.2012 Patentblatt 2012/11**

(73) Patentinhaber: **Rohde & Schwarz GmbH & Co. KG 81671 München (DE)**

(72) Erfinder: **WEIKERT, Oomke 81827 München (DE)**

(74) Vertreter: **Körfer, Thomas Mitscherlich & Partner Patent- und Rechtsanwälte Sonnenstrasse 33 80331 München (DE)**

(56) Entgegenhaltungen:
EP-A2- 1 521 386        WO-A1-2008/010740
US-A1- 2006 093 060        US-A1- 2008 080 632

• RUPP M ET AL: "On extended alamouti schemes for space-time coding", WIRELESS PERSONAL MULTIMEDIA COMMUNICATIONS, 2002. THE 5TH INTERNATION AL SYMPOSIUM ON OCT. 27-30, 2002, PISCATAWAY, NJ, USA,IEEE, Bd. 1, 27. Oktober 2002 (2002-10-27), Seiten 115-119, XP010619059, ISBN: 978-0-7803-7442-3

• HOTTINEN A ET AL: "A ROANDOMIZATION TECHNIQUE FOR NON-ORTHOGONAL SPACE-TIME BLOCK CODES", CONNECTING THE MOBILE WORLD : PROCEEDINGS / IEEE VTS 53RD VEHICULAR TECHNOLOGY CONFERENCE, SPRING, 2001; [IEEE VEHICULAR TECHNOLGY CONFERENCE], IEEE SERVICE CENTER, USA, Bd. CONF. 53, 6. Mai 2001 (2001-05-06), Seiten 1479-1482, XP001067210, DOI: DOI:10.1109/VETECS. 2001.944633 ISBN: 978-0-7803-6728-9

## Beschreibung

Die Erfindung betrifft ein Verfahren und eine Vorrichtung zur Ermittlung von Schätzwerten für Sendesymbole in einem MIMO-OFDM-System.

In der mobilen Übertragungstechnik mit hohen Übertragungsraten und mit niedriger bis mittlerer Mobilität der Endgeräte werden zunehmend Mehrantennensysteme (Multiple-Input-Multiple-Output(MIMO)-Systeme) mit Vielfachzugriff nach dem orthogonalen Frequenzmultiplex (Orthogonal-Frequency-Division-Multiplexing (OFDM)) verwendet. Ein wichtiger Standard für derartige MIMO-OFDM-Systeme stellt der Mobile WIMAX Standard IEEE802.16e dar.

Zum technischen Hintergrund sei auf die US 2008/0063103 A1 verwiesen, die ein Verfahren zur Korrektur von Alamonticodierten MIMO-OFDM-Signalen zeigt.

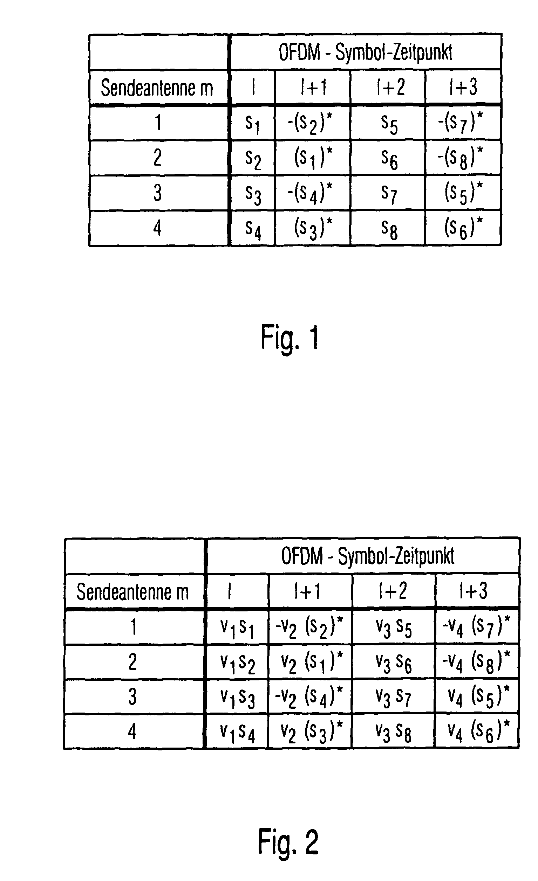

Insbesondere bei MIMO-OFDM-Übertragungssystemen mit vier Sendeantennen hat sich für Messzwecke der Übertragungsmodus "Matrix B" durchgesetzt, da hierbei lediglich zwei Empfangsantennen erforderlich sind. Eine Verteilung bzw. Kodierung der einzelnen zu sendenden Datensymbole $s_1, s_2, s_3, s_4, \ldots$ auf die vier Sendeantennen $m = 1,2,3,4$ in jeweils vier aufeinander folgenden OFDM-SymbolZeitpunkten $l, l+1, l+2, l+3$ nach dem "Matrix B"-Übertragungsmodus ist der Tabelle in Fig. 1 zu entnehmen. Zusätzlich erfolgt gemäß der Tabelle in Fig. 2 im Übertragungsmodus "Matrix B" im Hinblick auf eine zusätzliche Kanalverschlüsselung ("Subcarrier Randomizing") eine Gewichtung der in den vier Sendeantennen $m = 1,2,3,4$ jeweils zu sendenden Datensymbole $s_1, s_2, s_3, s_4, \ldots$ in jeweils vier aufeinander folgenden OFDM-Symbol-Zeitpunkten $l, l+1, l+2, l+3$ mit Koeffizienten $v_1, v_2, v_3, v_4$, die jeweils die Werte +1 oder -1 annehmen können.

Zur Schätzung der gesendeten Datensymbole im Rahmen der Dekodierung der Empfangssymbole müssen einerseits die Koeffizienten $v_1, v_2, v_3, v_4$ und anderseits die Kanalübertragungsfaktoren der Übertragungskanäle zwischen jeder Sendeantenne und jeder Empfangsantenne geschätzt werden. Die Schätzung der Kanalübertragungsfaktoren erfolgt typischerweise auf der Basis von Pilotsymbolen. Hierzu werden entweder dem Empfänger bekannte, standardkonforme Pilotsymbole oder dem Empfänger nicht bekannte beliebige Pilotsymbole verwendet. Bei Verwendung von beliebigen Pilotsymbolen können die einzelnen Kanalübertragungsfaktoren nach gängigen "Matrix B"-Dekodierverfahren zwar in ihrem Betrag korrekt geschätzt werden, wie beispielsweise in WO2008/010740 beschrieben. In ihrer Phase weisen die einzelnen Übertragungsfaktoren jedoch bei gängigen "Matrix B"-Dekodierverfahren eine Unsicherheit von 180° auf. Da sowohl die einzelnen Kanalübertragungsfaktoren als auch die einzelnen Koeffizienten zur Kanalverschlüsselung hinsichtlich ihres Vorzeichens von den gängigen Dekodierverfahren nicht exakt bestimmbar sind, sind auch die gesendeten Datensymbole nicht exakt ermittelbar.

Aufgabe der Erfindung ist es deshalb, für ein MIMO-System mit vier Sendeantennen und mit "Matrix B"-Übertragungsmodus ein Dekodierverfahren zu entwickeln, dass eine exakte Schätzung der gesendeten Datensymbole ermöglicht.

Die Erfindungsaufgabe wird durch ein Verfahren zur Ermittlung von Schätzwerten für von zumindest vier Sendeantennen eines MIMO-OFDM-Übertragungssystems jeweils gesendete Datensymbolen mit den Merkmalen des Patenanspruchs 1 und durch eine zugehörige Vorrichtung mit den Merkmalen des Patentanspruchs 10 gelöst. Vorteilhafte technische Erweiterungen sind in den jeweils abhängigen Patentansprüchen aufgeführt. Der Anspruch 11 bzw. 12 bezieht sich auf einen entsprechenden Datenträger bzw. ein entsprechendes Computerprogramm.

Erfindungsgemäß werden bei einem MIMO-OFDM-Übertragungssystem mit "Matrix B"-Kodierung und zusätzlicher Gewichtung der von jeweils einer Sendeantenne gesendeten Sendesymbole mit Koeffizienten Hypothesen für die von den bevorzugt vier Sendeantennen jeweils gesendeten Datensymbole aufgestellt, indem die von den mindestens zwei Empfangsantennen, bevorzugt von den genau zwei Empfangsantennen, jeweils empfangenen Datensymbole mit möglichen Hypothesen für die Kanalübertragungsfaktoren der Übertragungskanäle zwischen der jeweiligen Sendeantenne und der jeweiligen Empfangsantenne und mit Hypothesen für die Koeffizienten gewichtet werden. Für jede auf diese Weise aufgestellte Hypothese für das jeweils gesendete Datensymbol wird eine Metrik aufgestellt und der Schätzwert für das jeweils gesendete Datensymbol aus derjenigen Hypothese für das jeweils gesendete Datensymbol ermittelt, die die kleinste Metrik aufweist.

In einer Variante wird die Metrik jeweils separat für jedes von einer Sendeantenne in einem OFDM-Symbol-Zeitpunkt jeweils gesendete Datensymbol ermittelt. Hierbei wird für jede zum jeweiligen gesendeten Datensymbol ermittelte Hypothese die euklidische Distanz zum im Konstellationsdiagramm nächst gelegenen Datensymbol des verwendeten Symbolalphabets berechnet. Bei einer "Matrix B"-Kodierung, bei der aus Redundanzgründen jeweils zwei der vier Sendeantennen mit identischen zu sendenden Datensymbole versorgt werden, müssen deshalb bei einer derartigen Metrik-Berechnung nur die Schätzwerte der von jeder zweiten Sendeantenne jeweils gesendeten Datensymbole ermittelt werden. Vorteilhaft sind in diesem Fall nur die halbe Anzahl von Hypothesen für die Kanalübertragungsfaktoren und die halbe Anzahl von Metriken zu berechnen.

In einer zweiten Variante wird die Metrik jeweils über die von allen bevorzugt vier Sendeantennen in einem OFDM-Symbol-Zeitpunkt gesendeten Datensymbole ermittelt. Hierbei wird für eine Hypothese für die von allen vier Sendeantennen jeweils gesendeten Datensymbolen die euklidische Distanz zu den jeweils nächst gelegenen Datensymbolen des Symbolalphabets im Konstellationsdiagramm berechnet. Der Berechnungsaufwand ist in der zweiten Variante gegenüber der ersten Variante höher. Dagegen ist die Dekodierung in der zweiten Variante aufgrund der Redundanz gegenüber der ersten Variante robuster.

Als Hypothesen für die zu den einzelnen Übertragungskanälen jeweils gehörigen Übertragungsfaktoren sind jeweils der positive und der negative Wert des jeweils betragsmäßig korrekt ermittelbaren und nur hinsichtlich seines Vorzeichens nicht eindeutig ermittelbaren Übertragungsfaktors anzusetzen. Da die Übertragungsfaktoren der Übertragungskanäle, die von einer gemeinsamen Sendeantenne ausgehen, aus demselben Grund hinsichtlich des Vorzeichens nicht ermittelbar, aber identisch sind und hinsichtlich des Betrag vorab ermittelbar sind, sind unabhängig von der Anzahl der Empfangsantennen lediglich Hypothesen für vier Übertragungsfaktoren zu ermitteln.

Als Hypothesen für die Koeffizienten zur zusätzlichen Kanalverschlüsselung sind bevorzugt die Werte +1 oder -1 anzusetzen, wobei für die Koeffizienten zur Gewichtung der in jeweils jedem zweiten OFDM-Symbol-Zeitpunkt jeweils gesendeten Datensymbole entweder nur der Wert +1 oder nur der Wert -1 anzusetzen sind.

Auf diese Weise ergeben sich in einer ersten Ausführungsform des erfindungsgemäßen Verfahrens insgesamt 32 Hypothesen-Kombinationen, für die die zugehörigen Metriken zu ermitteln sind. Da von diesen insgesamt 32 Hypothesen-Kombinationen lediglich 8 Hypothesen-Kombinationen auf Datensymbole im Konstellationsdiagramm führen, die zum verwendeten Symbolalphabet gehören, und da das Vorzeichen für die Schätzwerte der von den vier Sendeantennen jeweils gesendeten Datensymbole bei einer amplitudenorientierten Analyse der Sendesymbole, beispielsweise bei einer Messung der Amplitude des Fehlervektors (Error Vector Magnitude (EVM)) oder des IQ-Offsets, nicht relevant ist, ist bei der Ermittlung der Schätzwerte für die von den vier Sendeantennen jeweils gesendeten Datensymbole lediglich eine dieser 8 Hypothesen-Kombinationen, die zu Datensymbolen des Symbolalphabets gehören, zu detektieren.

Um die Anzahl von insgesamt 32 zu ermittelnden Hypothesen-Kombinationen auf insgesamt 10 zu berechnende Hypothesen-Kombinationen in einer zweiten Ausführungsform des erfindungsgemäßen Verfahrens zu reduzieren, sind neben der Beschränkung der Hypothesen für die Koeffizienten zur Gewichtung der in jedem zweiten OFDM-Symbol-Zeitpunkt jeweils gesendeten Datensymbole einzig auf den Wert +1 oder einzig auf den Wert -1 entweder für die Hypothesen der zu den einzelnen Übertragungskanälen jeweils gehörigen Übertragungsfaktoren jeweils nur positive Werte des jeweils betragsmäßig korrekt ermittelbaren Übertragungsfaktors oder nur für einen einzigen, zu einem Übertragungskanal gehörigen Übertragungsfaktor ein negativer Wert des jeweils betragsmäßig korrekt ermittelbaren Übertragungsfaktors anzusetzen. Von den in diesem Fall insgesamt 10 zu ermittelnden Hypothesen-Kombinationen führt mindestens eine Hypothesen-Kombination auf Datensymbole im Konstellationsdiagramm, die zum verwendeten Symbolalphabet gehören. Aufgrund einer rein amplitudenorientierten Analyse der Sendesymbole ist lediglich eines dieser Hypothesen-Kombinationen, die auf zum verwendeten Symbolalphabet gehörigen Datensymbole im Konstellationsdiagramm führen, zu detektieren.

Die Kanalübertragungsfaktoren in den einzelnen Subträgern und in den einzelnen OFDM-Symbolzeitpunkten eines Teil-Übertragungskanals sind bei Annahme eines frequenzflachen und zeitinvarianten Teil-Übertragungskanals gleich, so dass nur für einen Subträger und für einen OFDM-Symbol-Zeitpunkt des jeweiligen Teil-Übertragungskanals, typischerweise für den ersten Subträger und für den ersten OFDM-Symbol-Zeitpunkt des jeweiligen Teil-Übertragungskanals, eine Hypothesen- und Metrik-Berechnung für alle möglichen Hypothesen durchzuführen ist und diese Ergebnisse auf die übrigen Subträger und die übrigen OFDM-Symbol-Zeitpunkte des jeweiligen Teil-Übertragungskanal zu übertragen sind.

Ausführungsformen des erfindungsgemäßen Verfahrens und der erfindungsgemäßen Vorrichtung zur Ermittlung von Schätzwerten für von vier Sendeantennen eines MIMO-OFDM-Übertragungssystems jeweils gesendete Datensymbolen werden im Folgenden anhand der Zeichnung im Detail erläutert. Die Figuren der Zeichnung zeigen:

Fig. 1    eine Tabelle zur Matrix-B-Kodierung von durch vier Sendeantennen jeweils gesendeten Datensymbolen in einem MIMO-OFDM-Übertragungssystem,

Fig. 2    eine Tabelle zur zusätzlichen KanalVerschlüsselung bei Matrix-B-Kodierung in einem MIMO-OFDM-Übertragungssystem,

Fig. 3    ein Blockdiagramm eines MIMO-OFDM-Übertragungssystems mit zwei Sende- und zwei Empfangsantennen im Zeitbereich,

Fig. 4    ein Blockdiagramm eines MIMO-OFDM-Übertragungssystems mit zwei Sende- und zwei Empfangsantennen im Frequenzbereich,

Fig. 5    eine Tabelle mit 32 Hypothesen-Kombinationen einer ersten Ausführungsform der erfindungsgemäßen Schätzung von Sendesymbolen,

Fig. 6    eine Tabelle mit 10 Hypothesen-Kombinationen einer zweiten Ausführungsform der erfindungsgemäßen Schätzung von Sendesymbolen und

Fig. 7    ein Flussdiagramm des erfindungsgemäßen Verfahrens zur Ermittlung von Schätzwerten für von vier Sendeantennen eines MIMO-OFDM-Übertragungssystems jeweils gesendete Datensymbolen.

Im Folgenden werden die mathematischen Grundlagen, die für das Verständnis der Erfindung erforderlich sind, besprochen:

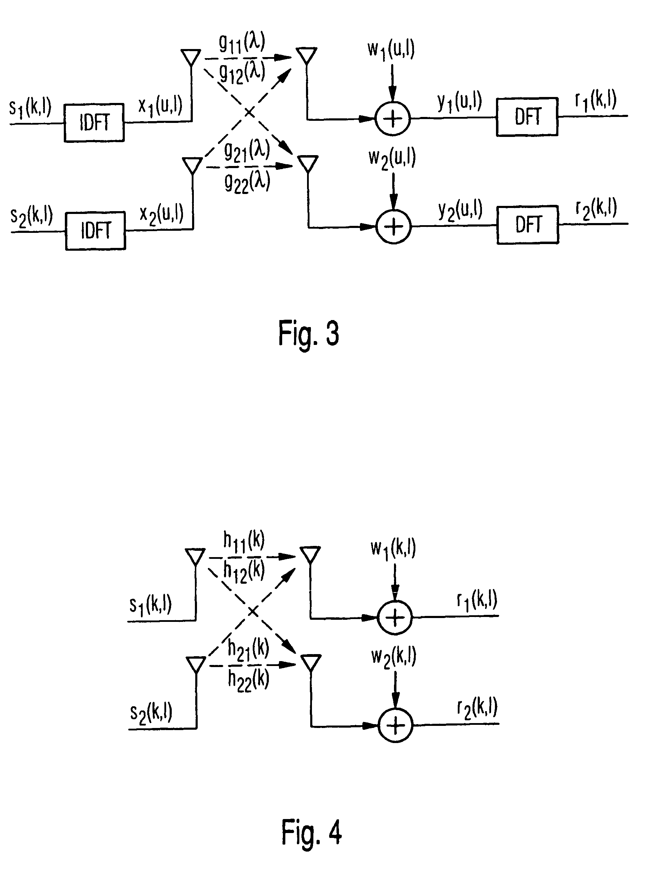

Gemäß dem Blockdiagramm in Fig. 3, in dem ein MIMO-OFDM-Übertragungssystem mit zwei Sende- und zwei Empfangsantennen dargestellt ist, wird in jeder Sendeantenne $m$ ein OFDM-Datensymbol $s_m(k,l)$ im Subfrequenz-träger $k$ und im OFDM-Symbol-Zeitpunkt $l$ gesendet. Mittels inverser diskreter Fourier-Transformation (IDFT) werden die zu sendenden OFDM-Datensymbole $s_m(k,l)$ aus den Frequenzbereich in den Zeitbereich transformiert und ergeben dort das korrespondierende OFDM-Datensymbol $x_m(u,l)$. Zum Transformationsindex $k$ im Frequenzbereich der IDFT korrespondiert der Transformationsindex $u$ im Zeitbereich. Das von der Sendeantenne $m$ gesendete OFDM-Datensymbol $s_m(k,l)$ wird über den Übertragungskanal mit dem Übertragungsfaktor $g_{nm}(\lambda)$ zur Empfangsantenne $n$ übertragen. Die Größe $\lambda$ kennzeichnet dabei den Koeffizienten der Impulsantwort zwischen der Sendeantenne $m$ und der Empfangsantenne $n$. Hierbei wird von einem frequenzselektiven und zeitinvarianten Übertragungskanal ausgegangen.

In der Empfangsantenne $n$ erfolgt eine Überlagerung der von allen Sendeantennen $m$ jeweils gesendeten OFDM-Datensymbole $x_m(u,l)$ und einer zusätzlichen additiven Rauschstörung $w_n(u,l)$ aufgrund des Rauschens in analogen Komponenten der Empfangsantenne $n$. Das durch die Überlagerung in der Empfangsantenne $n$ resultierende empfangene OFDM-Datensymbol $y_n(u,l)$ im Zeitbereich wird mittels diskreter Fourier-Transformation (DFT) in das emp-fangende OFDM-Datensymbol $r_n(u,l)$ im Frequenzbereich transformiert.

Für das in Fig. 3 dargestellte MIMO-OFDM-Übertragungssystem mit zwei Sende- und zwei Empfangsantennen ergeben sich die in Gleichung (1) dargestellten mathematischen Beziehungen für die empfangenden OFDM-Datensym-bole $y_n(u,l)$.

$$y_1(u,l) = \sum_{\lambda} g_{11}(\lambda) \cdot x_1(u-\lambda,l) + \sum_{\lambda} g_{12}(\lambda) \cdot x_2(u-\lambda,l) + w_1(u,l)$$
$$y_2(u,l) = \sum_{\lambda} g_{21}(\lambda) \cdot x_1(u-\lambda,l) + \sum_{\lambda} g_{22}(\lambda) \cdot x_2(u-\lambda,l) + w_2(u,l)$$

$$(1)$$

Ein MIMO-OFDM-Übertragungssystem, das zum MIMO-OFDM-Übertragungssystem in Fig. 3 äquivalent ist und einzig Frequenzbereichs-Größen aufweist, ist in Fig. 4 dargestellt. Die Übertragungsfaktoren $h_{nm}(k)$ im Subfre-quenzträger $k$ zwischen der Sendeantenne $m$ und der Empfangsantenne $n$ ergeben sich durch diskrete Fourier-Transformation aus den korrespondierenden Übertragungsfaktoren $g_{nm}(\lambda)$ im Zeitbereich. Analog ergeben sich die Rausch-größen $w_n(k,l)$ im Frequenzbereich durch diskrete Fourier-Transformation aus den korrespondierenden Rauschgrößen $w_n(u,l)$ im Zeitbereich.

Für das in Fig. 4 dargestellte MIMO-OFDM-Übertragungssystem mit zwei Sende- und zwei Empfangsantennen ergeben sich die in Gleichung (2) dargestellten mathematischen Beziehungen für die empfangenden OFDM-Datensym-bole $r_n(u,l)$.

$$r_1(k,l) = \sum_{k} h_{11}(k) \cdot s_1(k,l) + \sum_{k} h_{12}(k) \cdot s_2(k,l) + w_1(k,l)$$
$$r_2(k,l) = \sum_{k} h_{21}(k) \cdot s_1(k,l) + \sum_{k} h_{22}(k) \cdot s_2(k,l) + w_2(k,l)$$

$$(2)$$

Ausgehend von Gleichung (2) ergibt sich bei einer "Matrix-B"-Kodierung gemäß der Tabelle in Fig. 1 und einer zusätzlichen Kanalverschlüsselung gemäß der Tabelle in Fig. 2 für ein von der Empfangsantenne $n$ empfangenes OFDM-Datensymbol $r_n(l)$ im OFDM-Symbol-Zeitpunkt $l$ und für ein von der Empfangsantenne $n$ empfangenes OFDM-Daten-symbol $r_n^*(l+1)$ im OFDM-Symbol-Zeitpunkt $l+1$ die mathematische Beziehung in Gleichung (3A) bzw. in der Kurzfassung in Gleichung (3B) sowie für ein von der Empfangsantenne $n$ empfangenes OFDM-Datensymbol $r_n(l+2)$ im OFDM-Symbol-Zeitpunkt $l+2$ und für ein von der Empfangsantenne $n$ empfangenes OFDM-Datensymbol $r_n^*(l+3)$ im OFDM-Symbol-Zeitpunkt $l+3$ die mathematische Beziehung in Gleichung (4A) bzw. in der Kurzfassung in Gleichung (4B).

$$\begin{pmatrix} r_n(l) \\ r_n^{\bullet}(l+1) \end{pmatrix} = \begin{pmatrix} v_1 & 0 \\ 0 & v_2 \end{pmatrix} \cdot \begin{pmatrix} h_{n1} & h_{n2} & h_{n3} & h_{n4} \\ h_{n2}^{\bullet} & -h_{n1}^{\bullet} & h_{n4}^{\bullet} & -h_{n3}^{\bullet} \end{pmatrix} \cdot \begin{pmatrix} s_1 \\ s_2 \\ s_3 \\ s_4 \end{pmatrix} \qquad (3A)$$

$$\vec{r}_{n,1-4} = V \cdot H_{n,1-4} \cdot \vec{s}_{1-4} \qquad (3B)$$

$$\begin{pmatrix} r_n(l+2) \\ r_n^{\bullet}(l+3) \end{pmatrix} = \begin{pmatrix} v_3 & 0 \\ 0 & v_4 \end{pmatrix} \cdot \begin{pmatrix} h_{n1} & h_{n2} & h_{n3} & h_{n4} \\ h_{n3}^{\bullet} & h_{n4}^{\bullet} & -h_{n1}^{\bullet} & -h_{n2}^{\bullet} \end{pmatrix} \cdot \begin{pmatrix} s_5 \\ s_6 \\ s_7 \\ s_8 \end{pmatrix} \qquad (4A)$$

$$\vec{r}_{n,5-8} = V \cdot H_{n,5-8} \cdot \vec{s}_{5-8} \qquad (4B)$$

In den Gleichungen (3A) und (3B) bzw. (4A) und (4B) wurde für den Übertragungsfaktor $h_{nm}(k)$ in Gleichung (2) die Abkürzung $h_{nm}$ eingeführt und der konjugiert komplexe Koeffizient $v_i^{\bullet}$ aufgrund der Tatsache, dass er reell ist, durch den Koeffizienten $v_i$ ersetzt.

Wie aus den Gleichungen (3A) und (3B) bzw. (4A) und (4B) ersichtlich ist, sind für die Bestimmung der jeweils 4 gesendeten OFDM-Datensymbole $\vec{s}_{1-4}$ bzw. $\vec{s}_{5-8}$ bei bekannten Übertragungsfaktoren $h_{nm}$ und bei bekannten Koeffizienten $v_i$ mindestens zwei Empfangsantennen 1,2 erforderlich. Gemäß Gleichung (5A) und (5B) sowie Gleichung (6A) und (6B) ergeben sich die von den beiden Empfangsantennen 1,2 zu den OFDM-Symbolzeitpunkten $l$ und $l+1$ sowie $l+2$ und $l+3$ empfangenen OFDM-Datensymbole $\vec{r}_{1-4}$ bzw. $\vec{r}_{5-8}$.

$$\begin{pmatrix} r_1(l) \\ r_1^{\bullet}(l+1) \\ r_2(l) \\ r_2^{\bullet}(l+1) \end{pmatrix} = \begin{pmatrix} v_1 & 0 & 0 & 0 \\ 0 & v_2 & 0 & 0 \\ 0 & 0 & v_1 & 0 \\ 0 & 0 & 0 & v_2 \end{pmatrix} \cdot \begin{pmatrix} H_{1,1-4} \\ H_{2,1-4} \end{pmatrix} \cdot \begin{pmatrix} s_1 \\ s_2 \\ s_3 \\ s_4 \end{pmatrix} \qquad (5A)$$

$$\vec{r}_{1-4} = V_{12} \cdot H_{1-4} \cdot \vec{s}_{1-4} \qquad (5B)$$

$$\begin{pmatrix} r_1(l+2) \\ r_1^\bullet(l+3) \\ r_2(l+2) \\ r_2^\bullet(l+3) \end{pmatrix} = \begin{pmatrix} v_3 & 0 & 0 & 0 \\ 0 & v_4 & 0 & 0 \\ 0 & 0 & v_3 & 0 \\ 0 & 0 & 0 & v_4 \end{pmatrix} \cdot \begin{pmatrix} H_{1,5-8} \\ H_{2,5-8} \end{pmatrix} \cdot \begin{pmatrix} s_5 \\ s_6 \\ s_7 \\ s_8 \end{pmatrix} \qquad (6A)$$

$$\bar{r}_{5-8} = V_{34} \cdot H_{5-8} \cdot \bar{s}_{5-8} \qquad (6B)$$

Zur Bestimmung der Matrixelemente der Kanalmatrizen $H_{1-4}$ bzw. $H_{5-8}$, in Gleichung (5B) bzw. (6B) ist eine Schätz-Matrix $\hat{H}$ mit geschätzten Übertragungsfaktoren $\hat{h}_{nm}$ erforderlich. Für ein MIMO-OFDM-Übertragungssystem mit jeweils vier Sende- und vier Empfangsantennen ergibt sich eine derartige Schätz-Matrix $\hat{H}$ gemäß Gleichung (7).

$$\hat{H} = \begin{pmatrix} \hat{h}_{11} & \hat{h}_{12} & \hat{h}_{13} & \hat{h}_{14} \\ \hat{h}_{21} & \hat{h}_{22} & \hat{h}_{23} & \hat{h}_{24} \\ \hat{h}_{31} & \hat{h}_{32} & \hat{h}_{33} & \hat{h}_{34} \\ \hat{h}_{41} & \hat{h}_{42} & \hat{h}_{43} & \hat{h}_{44} \end{pmatrix} \qquad (7)$$

Die Ermittlung der Schätzwerte $\hat{h}_{nm}$ für die einzelnen Übertragungsfaktoren $h_{nm}$ erfolgt auf der Basis von Pilotsymbolen. Sind die verwendeten Pilotsymbole standardkonform, so sind sie dem Empfänger bekannt und der Empfänger kann aus dem ihm bekannten, gesendeten Pilotsymbol und dem zu dem bekannten gesendeten Pilotsymbol korrespondierenden empfangenen Pilotsymbol den Schätzwert $\hat{h}_{nm}$ für den zugehörigen Übertragungsfaktor $h_{nm}$ hinsichtlich Betrag und Vorzeichen korrekt ermitteln.

Werden beliebige, nicht-standardkonforme Pilotsymbole, bevorzugt BPSK-modulierte Pilotsymbole, verwendet, so kann zwar der Betrag des Schätzwerts $\hat{h}_{nm}$ für den zugehörigen Übertragungsfaktor $h_{nm}$ vom Empfänger ermittelt werden, aber aufgrund der Unkenntnis des Empfängers, ob ein BPSK-moduliertes Pilotsymbol +1 oder ein BPSK-moduliertes Pilotsymbol -1 gesendet wurde, besteht über das Vorzeichen oder die Phase des Schätzwerts $\hat{h}_{nm}$ für den zugehörigen Übertragungsfaktor $h_{nm}$ eine Unsicherheit. Diese Unsicherheit über das Vorzeichen des Schätzwerts $\hat{h}_{nm}$ für den zugehörigen Übertragungsfaktor $h_{nm}$ ist bei allen Übertragungsfaktoren $h_{nm}$, die sich auf dieselbe Sendeantenne beziehen, aufgrund des von derselben Sendeantenne zu allen Empfangsantennen identisch gesendeten Pilotsymbols identisch. Somit weisen die Schätzwerte $\hat{h}_{nm}$ für die Übertragungsfaktoren $h_{nm}$ einer Spalte der Schätz-Matrix $\hat{H}$ dasselbe Vorzeichen auf und unterscheiden sich nur in ihren jeweiligen Beträgen. In den einzelnen Subfrequenzträgern des Übertragungskanals von einer Sende- zu einer Empfangsantenne ist der Schätzwert $\hat{h}_{nm}$ für den zugehörigen Übertragungsfaktor $h_{nm}$ hinsichtlich Vorzeichen und Betrag aufgrund frequenzflacher Teilkanäle identisch.

Bei unbekannten Koeffizienten $v_1, v_2, v_3, v_4$ werden im Empfänger Hypothesen $\tilde{v}_1, \tilde{v}_2, \tilde{v}_3, \tilde{v}_4$ für die unbekannten Koeffizienten $v_1, v_2, v_3, v_4$ aufgestellt. Mit diesen Hypothesen $\tilde{v}_1, \tilde{v}_2, \tilde{v}_3, \tilde{v}_4$ für die unbekannten Koeffizienten $v_1, v_2, v_3, v_4$ werden die empfangenen OFDM-Datensymbole $\vec{r}_{1-4}$ bzw. $\vec{r}_{5-8}$ gemäß Gleichung (8A) und (8B) sowie Gleichung (9A) und (9B) gewichtet.

$$\begin{pmatrix} \tilde{r}_1(l) \\ \tilde{r}_1^\bullet(l+1) \\ \tilde{r}_2(l) \\ \tilde{r}_2^\bullet(l+1) \end{pmatrix} = \begin{pmatrix} \tilde{v}_1 & 0 & 0 & 0 \\ 0 & \tilde{v}_2 & 0 & 0 \\ 0 & 0 & \tilde{v}_1 & 0 \\ 0 & 0 & 0 & \tilde{v}_2 \end{pmatrix} \cdot \begin{pmatrix} r_1(l) \\ r_1^\bullet(l+1) \\ r_2(l) \\ r_2^\bullet(l+1) \end{pmatrix} \qquad (8A)$$

$$\bar{\bar{r}}_{1\text{-}4} = \tilde{V}_{12} \cdot \bar{r}_{1\text{-}4} \tag{8B}$$

$$\begin{pmatrix} \tilde{r}_1(l+2) \\ \tilde{r}_1^{\bullet}(l+3) \\ \tilde{r}_2(l+2) \\ \tilde{r}_2^{\bullet}(l+3) \end{pmatrix} = \begin{pmatrix} \tilde{v}_3 & 0 & 0 & 0 \\ 0 & \tilde{v}_4 & 0 & 0 \\ 0 & 0 & \tilde{v}_3 & 0 \\ 0 & 0 & 0 & \tilde{v}_4 \end{pmatrix} \cdot \begin{pmatrix} r_1(l+2) \\ r_1^{\bullet}(l+3) \\ r_2(l+2) \\ r_2^{\bullet}(l+3) \end{pmatrix} \tag{9A}$$

$$\bar{\bar{r}}_{5\text{-}8} = \tilde{V}_{34} \cdot \bar{r}_{5\text{-}8} \tag{9B}$$

Die gemäß Gleichung (8A) und (8B) sowie Gleichung (9A) und (9B) aus der Gewichtung der empfangen OFDM-Datensymbole $\vec{r}_{1\text{-}4}$ bzw. $\vec{r}_{5\text{-}8}$ mit den Hypothesen $\tilde{v}_1, \tilde{v}_2, \tilde{v}_3, \tilde{v}_4$ für die unbekannten Koeffizienten $v_1, v_2, v_3, v_4$ kanalentschlüsselten Hypothesen $\bar{\bar{r}}_{1\text{-}4}$ bzw. $\bar{\bar{r}}_{5\text{-}8}$ für die empfangenen OFDM-Datensymbole $\vec{r}_{1\text{-}4}$ bzw. $\vec{r}_{5\text{-}8}$ werden bei hinsichtlich des Betrages bekannten und hinsichtlich des Vorzeichens unbekannten Schätzwerten $\hat{h}_{n1}, \hat{h}_{n2}, \hat{h}_{n3}, \hat{h}_{n4}$ für die Übertragungsfaktoren $h_{n1}, h_{n2}, h_{n3}, h_{n4}$ der von den vier Sendeantennen 1,2,3,4 zu den jeweils $n$ Empfangsantennen jeweils sich erstreckenden Teilkanäle gemäß Gleichung (10) und (11) mit den Hypothesen-Matrizen $\tilde{H}_{1\text{-}4}$ bzw. $\tilde{H}_{5\text{-}8}$ für die Kanal-Übertragungsmatrizen $H_{1\text{-}4}$ bzw. $H_{5\text{-}8}$ zur Ermittlung von Hypothesen $\bar{\bar{s}}_{1\text{-}4}$ bzw. $\bar{\bar{s}}_{5\text{-}8}$ für die gesendeten OFDM-Symbole $\vec{s}_{1\text{-}4}$ bzw. $\vec{s}_{5\text{-}8}$ entzerrt. Die Hypothesen-Matrizen $\tilde{H}_{1\text{-}4}$ bzw. $\tilde{H}_{5\text{-}8}$ enthalten jeweils Hypothesen $\tilde{h}_{n1}, \tilde{h}_{n2}, \tilde{h}_{n3}, \tilde{h}_{n4}$ für die Übertragungsfaktoren $h_{n1}, h_{n2}, h_{n3}, h_{n4}$ in den Teilkanälen zwischen den vier Sendeantennen und den $n=1,..., N_R$ Empfangs-Antennen, wobei $N_R$ die Anzahl von Empfangsantennen ist. Für die Hypothesen $\tilde{h}_{n1}, \tilde{h}_{n2}, \tilde{h}_{n3}, \tilde{h}_{n4}$ für die Übertragungsfaktoren $h_{n1}, h_{n2}, h_{n3}, h_{n4}$ werden dabei aufgrund der Bekanntheit des Betrages der Schätzung des jeweiligen Übertragungsfaktors und aufgrund der Unsicherheit im Vorzeichen der Schätzung des jeweiligen Übertragungsfaktors die beiden Werte $+\hat{h}_{nm}$ und $-\hat{h}_{nm}$ gewählt, wobei $\hat{h}_{nm}$ der bekannte Betrag des Schätzwerts des jeweiligen Übertragungsfaktors ist. Da andererseits die geschätzten Übertragungsfaktoren $\hat{h}_{nm}$ aufgrund der Unsicherheit in der Kanalschätzung $\hat{h}_{nm} = \pm h_{nm}$ annehmen, gilt bei Berücksichtigung von $\hat{h}_{nm} = \pm \tilde{h}_{nm}$ für die Hypothese $\tilde{h}_{nm}$ des jeweiligen Übertragungsfaktors $\tilde{h}_{nm} = \pm h_{nm}$ oder $\dfrac{\tilde{h}_{nm}}{h_{nm}} = \pm 1$ .

$$\hat{\bar{s}}_{1\text{-}4} = \tilde{H}^{-1}_{1\text{-}4} \cdot \bar{\bar{r}}_{1\text{-}4} \tag{10}$$

$$\bar{\bar{s}}_{5\text{-}8} = \tilde{H}^{-1}_{5\text{-}8} \cdot \bar{\bar{r}}_{5\text{-}8} \tag{11}$$

Setzt man die mathematischen Beziehungen für die kanalentschlüsselten Hypothesen $\bar{\bar{r}}_{1\text{-}4}$ bzw. $\bar{\bar{r}}_{5\text{-}8}$ für die empfangenen OFDM-Datensymbole $\vec{r}_{1\text{-}4}$ bzw. $\vec{r}_{5\text{-}8}$ aus Gleichung (8B) bzw. (9B) und die mathematischen Beziehungen für empfangenen OFDM-Datensymbole $\vec{r}_{1\text{-}4}$ bzw. $\vec{r}_{5\text{-}8}$ aus Gleichung (5B) bzw. (6B) in die Gleichung (10) bzw. (11) ein, so ergibt sich Gleichung (12) bzw. (13).

$$\bar{\bar{s}}_{1\text{-}4} = \tilde{H}^{-1}_{1\text{-}4} \cdot \tilde{V}_{12} \cdot \bar{r}_{1\text{-}4} = \tilde{H}^{-1}_{1\text{-}4} \cdot \tilde{V}_{12} \cdot V_{12} \cdot H_{1\text{-}4} \cdot \bar{s}_{1\text{-}4} \tag{10}$$

$$\vec{\vec{s}}_{5-8} = \widetilde{\overline{H}}^{-1}{}_{5-8} \cdot \overrightarrow{\widetilde{V}}_{34} \cdot \overrightarrow{r}_{5-8} = \widetilde{\overline{H}}^{-1}{}_{5-8} \cdot \widetilde{V}_{34} \cdot V_{34} \cdot H_{5-8} \cdot \overrightarrow{s}_{5-8} \qquad (11)$$

Stimmen die Hypothesen $\tilde{v}_i$ für die Koeffizienten $v_i$ mit den tatsächlichen Koeffizienten $v_i$ und die Hypothesen $\tilde{h}_{nm}$ für die Übertragungsfaktoren $h_{nm}$ mit den tatsächlichen Übertragungsfaktoren $h_{nm}$ überein, so stimmen die Hypothesen $\vec{\vec{s}}_{1-4}$ bzw. $\vec{\vec{s}}_{5-8}$ für die gesendeten OFDM-Datensymbole $\vec{s}_{1-4}$ bzw. $\vec{s}_{5-8}$ gemäß Gleichung (12) bzw. (13) mit den tatsächlich gesendeten OFDM-Datensymbole $\vec{s}_{1-4}$ bzw. $\vec{s}_{5-8}$ überein und bilden die Schätzwerte $\vec{\hat{s}}_{1-4}$ bzw. $\vec{\hat{s}}_{5-8}$ für die gesendeten OFDM-Datensymbole $\vec{s}_{1-4}$ bzw. $\vec{s}_{5-8}$.

$$\vec{\vec{s}}_{1-4} = \widetilde{H}^{-1}{}_{1-4} \cdot \underbrace{\widetilde{V}_{12} \cdot V_{12}}_{=1} \cdot H_{1-4} \cdot \vec{s}_{1-4} = \vec{s}_{1-4} = \vec{\hat{s}}_{1-4} \qquad (12)$$

$$\vec{\vec{s}}_{5-8} = \widetilde{H}^{-1}{}_{5-8} \cdot \underbrace{\widetilde{V}_{34} \cdot V_{34}}_{=1} \cdot H_{5-8} \cdot \vec{s}_{5-8} = \vec{s}_{5-8} = \vec{\hat{s}}_{5-8} \qquad (13)$$

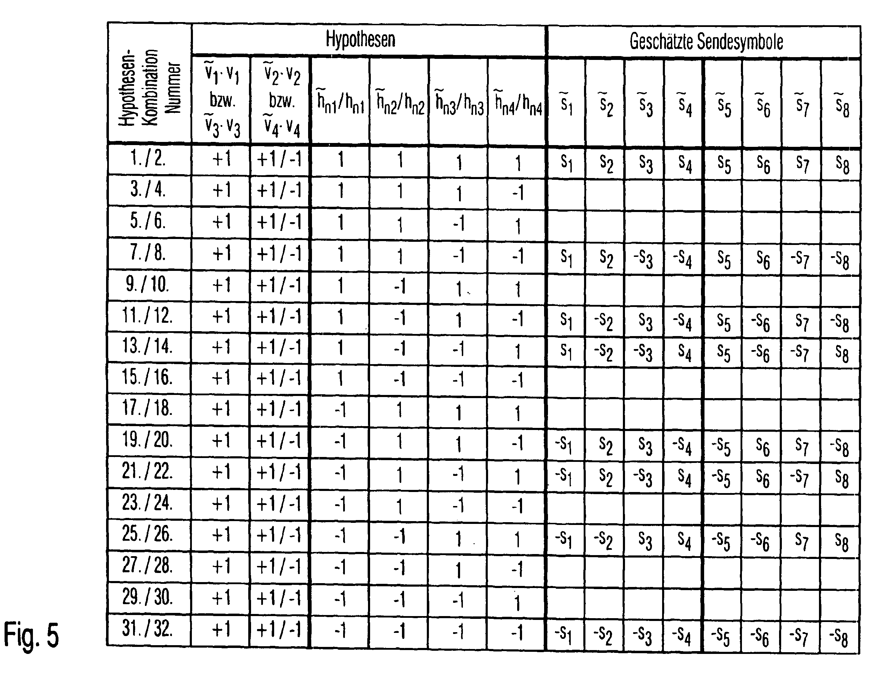

Kombiniert man jede Hypothese $\tilde{v}_i$ für die Koeffizienten $v_i$ und jede Hypothese $\tilde{h}_{nm}$ für die Obertraqungsfaktoren $h_{nm}$ jeweils miteinander, so erhält man insgesamt 64 Hypothese-Kombinationen. Die Dekodierung der empfangenen OFDM-Datensymbole $\vec{r}_{1-4}$ bzw. $\vec{r}_{5-8}$ gemäß Gleichung (10) bzw. (11) zur Gewinnung der zugehörigen Hypothesen $\vec{\hat{s}}_{1-4}$ bzw. $\vec{\hat{s}}_{5-8}$ für die gesendeten OFDM-Datensymbole $\vec{s}_{1-4}$ bzw. $\vec{s}_{5-8}$ wird jeweils mit jeder einzelnen Hypothesen-Kombination aus allen 64 Hypothesen-Kombinationen separat durchgeführt. Führt man die Dekodierung mit allen 64 Hypothesen-Kombinationen durch, so ergeben sich die in der Tabelle von Fig. 5 dargestellten Dekodierungsergebnisse.

In der Tabelle der Fig. 5 sind linksseitig alle möglichen Hypothese-Kombinationen und rechtsseitig die mittels Gleichung (12) bzw. (13) ermittelten Hypothesen $\vec{\vec{s}}_{1-4}$ bzw. $\vec{\vec{s}}_{5-8}$ für die gesendeten OFDM-Datensymbole $\vec{s}_{1-4}$ bzw. $\vec{s}_{5-8}$ als Funktion der gesendeten OFDM-Datensymbole $\vec{s}_{1-4}$ bzw. $\vec{s}_{5-8}$ dargestellt.

Hierbei enthalten nur diejenigen rechtsseitigen Tabellenelemente jeweils einen Wert, bei denen eine singuläre und lineare Abhängigkeit zwischen der jeweiligen Hypothese $\tilde{s}_i$ des gesendeten OFDM-Symbols $s_i$ und dem zugehörigen tatsächlich gesendeten OFDM-Symbol $s_i$ besteht, die sich einzig noch durch das Vorzeichen unterscheiden kann. In allen anderen Fällen, in denen das jeweilige Tabellenelement leer ist, weist die jeweiligen Hypothese $\tilde{s}_i$ des gesendeten OFDM-Symbols $s_i$ einen komplexeren funktionalen Zusammenhang zu einem oder mehreren gesendeten OFDM-Symbols $s_i$ auf. Während im ersten Fall die jeweilige Hypothese $\tilde{s}_i$ des gesendeten OFDM-Symbols $s_i$ auf ein OFDM-Datensymbol des verwendeten Symbolalphabets im Konstellation trifft, das sich einzig vom tatsächlich gesendeten OFDM-Symbol $s_i$ noch durch das Vorzeichen unterscheiden kann, kommt im zweiten Fall die jeweilige Hypothese $\tilde{s}_i$ des gesendeten OFDM-Symbols $s_i$ auf keinem OFDM-Datensymbol des verwendeten Symbolalphabets im Konstellationsdiagramm zu liegen und scheidet deshalb als für die Dekodierung verwertbare Hypothesen-Kombination aus.

Zusätzlich ist festzustellen, dass bei einem Wert von -1 für das Produkt $\tilde{v}_1 \cdot \tilde{v}_2$ zwischen der Hypothese $\tilde{v}_1$ für den Koeffizienten $v_1$ und dem tatsächlichen Koeffizienten $v_1$ und gleichzeitig bei einem Wert von +1 für das Produkt $\tilde{v}_2 \cdot v_2$ zwischen der Hypothese $\tilde{v}_2$ für den Koeffizienten $v_2$ und dem tatsächlichen Koeffizienten $v_2$ für die Hypothese $\tilde{s}_i$ des gesendeten OFDM-Symbols $s_i$ das zugehörig gesendete OFDM-Datensymbol $\pm s_i$, das im Betrag identisch und einzig im Vorzeichen eventuell unterschiedlich ist, ermittelt wird wie bei einem Wert von +1 für das Produkt $\tilde{v}_1 \cdot v_1$ zwischen der Hypothese $\tilde{v}_1$ für den Koeffizienten $v_1$ und dem tatsächlichen Koeffizienten $v_1$ und gleichzeitig bei einem Wert von -1 für das Produkt $\tilde{v}_2 \cdot v_2$ zwischen der Hypothese $\tilde{v}_2$ für den Koeffizienten $v_2$ und dem tatsächlichen Koeffizienten $v_2$.

Außerdem ist festzustellen, dass bei einem Wert von -1 für das Produkt $\tilde{v}_1 \cdot v_1$ zwischen der Hypothese $\tilde{v}_1$ für den Koeffizienten $v_1$ und dem tatsächlichen Koeffizienten $v_1$ und gleichzeitig bei einem Wert von -1 für das Produkt $\tilde{v}_2 \cdot v_2$ zwischen der Hypothese $\tilde{v}_2$ für den Koeffizienten $v_2$ und dem tatsächlichen Koeffizienten $v_2$ für die Hypothese $s_i$ des

gesendeten OFDM-Symbols $s_i$ dasselbe gesendete OFDM-Datensymbol $\pm s_i$, das im Betrag identisch und einzig im Vorzeichen eventuell unterschiedlich ist, ermittelt wird wie bei einem Wert von +1 für das Produkt $\tilde{v}_1 \cdot v_1$ zwischen der Hypothese $\tilde{v}_1$ für den Koeffizienten $v_1$ und dem tatsächlichen Koeffizienten $v_1$ und gleichzeitig bei einem Wert von +1 für das Produkt $\tilde{v}_2 \cdot v_2$ zwischen der Hypothese $\tilde{v}_2$ für den Koeffizienten $v_2$ und dem tatsächlichen Koeffizienten $v_2$. Die gleichen Ergebnisse werden für das Produkt $\tilde{v}_3 \cdot v_3$ zwischen der Hypothese $\tilde{v}_3$ für den Koeffizienten $v_3$ und dem tatsächlichen Koeffizienten $v_3$ und für das Produkt $\tilde{v}_4 \cdot v_4$ zwischen der Hypothese $\tilde{v}_4$ für den Koeffizienten $v_4$ und dem tatsächlichen Koeffizienten $v_4$ erzielt.

Da das Vorzeichen des dekodierten OFDM-Datensymbols $\hat{s}_i$ bei einer amplitudenorientierten Analyse der gesendeten OFDM-Datensymbole nicht relevant ist, kann die Anzahl der Hypothesen-Kombinationen von ursprünglich 64 Hypothesen-Kombinationen in einer ersten Ausführungsform der Erfindung auf 32 Hypothesen-Kombinationen reduziert werden, indem für das Produkt $\tilde{v}_1 \cdot v_1$ und das Produkt $\tilde{v}_3 \cdot v_3$ jeweils, wie in der Tabelle der Fig. 5 gezeigt ist, entweder nur der Wert +1 oder nur der Wert -1 untersucht wird, während für die Produkte $\tilde{v}_2 \cdot v_2$ und $\tilde{v}_4 \cdot v_4$ jeweils die Werte +1 und -1 untersucht werden.

Für die Hypothesen-Kombinationen mit geradzahliger Hypothesen-Kombinations-Nummer in der Tabelle der Fig. 5 - in der Tabelle der Fig. 5 die grau unterlegten Hypothesen-Kombinations-Nummern - gelten die grau unterlegten Werte für die Produkte $\tilde{v}_2 \cdot v_2$ bzw. $\tilde{v}_4 \cdot v_4$ und die grau unterlegten Zuordnung der gesendeten OFDN-Datensymbole $s_i$ zu den Hypothesen $s_i$ der gesendeten OFDM-Symbole $s_i$.

Wie aus der Tabelle in Fig. 5 zu ersehen ist, ergeben sich für jeden Vektor $\vec{s}_{1-4}$ bzw. $\vec{s}_{5-8}$ aus jeweils vier gesendeten OFDM-Datensymbolen jeweils 8 Hypothesen-Kombinationen $\vec{\tilde{s}}_{1-4}$ bzw. $\vec{\tilde{s}}_{5-8}$ für die gesendeten OFDM-Datensymbole $\vec{s}_{1-4}$ bzw. $\vec{s}_{5-8}$, die auf OFDM-Datensymbole des verwendeten Symbolalphabets im Konstellationsdiagramm führen. Aufgrund der Unsicherheit im Vorzeichen der einzelnen Hypothesen $\tilde{s}_i$ für das jeweilige gesendete OFDM-Datensymbol $s_i$ kann aus den einzelnen Hypothesen auf das ursprünglich gesendete und vorzeichenkorrekte OFDM-Datensymbol $s_i$ nicht geschlossen werden. Dies ist aber für eine rein amplitudenorientierten Analyse der gesendeten OFDM-Datensymbole $s_i$, beispielsweise für eine Messung der Amplitude des Fehlervektors (Error Vector Magnitude (EVM)) oder des IQ-Offsets des gesendeten OFDM-Datensymbols, nicht relevant.

Zur Identifizierunq eines der 8 korrekten Hypothesen-Kombinationen wird gemäß Gleichung (14A) bzw. (14B) jeweils eine Metrik berechnet, die die euklidische Distanz zwischen den ermittelten Hypothesen $\tilde{s}_i$ für jedes gesendete OFDM-Datensymbol $s_i$ und dem zugehörigen, im Konstellationsdiagramm nächstgelegenen OFDM-Datensymbol $d_i$ des verwendeten Symbolalphabets ermittelt.

$$Metrik = \sum_{i=1}^{4} \left| \tilde{s}_i - d_i \right| \qquad\qquad (14A)$$

$$Metrik = \sum_{i=5}^{8} \left| \tilde{s}_i - d_i \right| \qquad\qquad (14B)$$

Alternativ kann die Metrik gemäß Gleichung (15) jeweils für jedes OFDM-Datensymbol $s_i$ separat als euklidische Distanz zwischen der für das jeweilige gesendete OFDM-Datensymbol $s_i$ jeweils ermittelten Hypothese $\tilde{s}_i$ und dem zugehörigen, im Konstellationsdiagramm nächstgelegenen OFDM-Datensymbol $d_i$ des verwendeten Symbolalphabets berechnet werden.

$$Metrik = \left| \tilde{s}_i - d_i \right| \qquad \forall i = 1,..,8 \qquad\qquad (15)$$

Um die Anzahl der zu berechnenden Hypothesen-Kombinationen zusätzlich zu reduzieren, muss man durch geschickte Wahl der einzelnen Hypothesen $\tilde{h}_{nm}$ für den jeweiligen Übertragungsfaktor $h_{nm}$, der dem Empfänger nicht bekannt ist, auf mindestens eine der 8 Hypothesen-Kombinationen stoßen, die in der Tabelle der Fig. 5 jeweils eine

Hypothesen-Kombination $\bar{\bar{s}}_{1-4}$ bzw. $\bar{\bar{s}}_{5-8}$ für die beiden Vektoren $\vec{s}_{1-4}$ bzw. $\vec{s}_{5-8}$ der gesendeten OFDM-Daten-symbole mit gültigen OFDM-Datensymbolen des Symbolalphabets darstellt (Zeilen 1, 4, 6, 7, 10, 11, 13 und 16 in der Tabelle in Fig. 5).

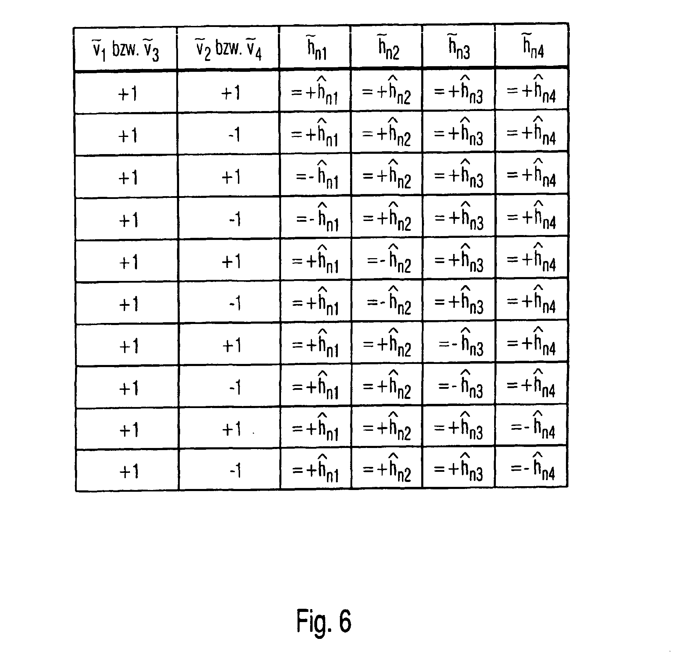

Aus der Tabelle der Fig. 5 ist ersichtlich, dass dies genau die Zeilen sind, in denen entweder alle auf den tatsächlichen Übertragungsfaktor normierten Hypothesen $\dfrac{\tilde{h}_{nm}}{h_{nm}}$ jeweils einen Wert +1 oder jeweils einen Wert -1 oder jeweils zwei normierte Hypothesen $\dfrac{\tilde{h}_{nm}}{h_{nm}}$ jeweils einen Wert +1 und jeweils zwei normierte Hypothesen $\dfrac{\tilde{h}_{nm}}{h_{nm}}$ jeweils einen Wert -1 aufweisen. Folglich sind für alle Werte-Kombinationen der tatsächlichen Übertragungsfaktoren entspre-chende Hypothesen $\tilde{h}_{nm}$ für die einzelnen Übertragungsfaktoren $h_{nm}$ zu wählen, dass zumindest eine dieser 8 Hypothesen-Kombinationen der normierten Hypothesen $\dfrac{\tilde{h}_{nm}}{h_{nm}}$ entsteht, die für jedes gesendete OFDM-Datensymbol $s_i$ zu einer Hypothese $\tilde{s}_i$ führt, die bei Nichtberücksichtigung des Vorzeichens der Hypothese $s_i$ zu einem OFDM-Symbol des verwendeten Symbolalphabets führt. Am einfachsten ist es, wenn die Verhältnisse der geschätzten zu den tatsächlichen Übertragungsfaktoren entweder alle positiv (d.h. $\hat{h}_{nm} = +h_{nm}$) oder alle negativ (d.h. $\hat{h}_{nm} = -h_{nm}$) oder zwei Verhältnisse jeweils positiv (d.h. $\hat{h}_{nm} = +h_{nm}$) und zwei Verhältnisse jeweils negativ (d. h. $\hat{h}_{nm} = -h_{nm}$) sind. In diesem Fall wird der Hypothese $\tilde{h}_{nm}$ für jeden der Übertragungsfaktoren $h_{nm}$ jeweils ein positiver Schätzwert $+\hat{h}_{nm}$ für den Übertragungsfaktor $h_{nm}$ zugewiesen (siehe Zeilen 1 und 2 in der Tabelle der Fig. 6) und die zugehörigen normierten Hypothesen $\dfrac{\tilde{h}_{nm}}{h_{nm}}$ ergeben sich zu $\dfrac{\tilde{h}_{nm}}{h_{nm}} = \dfrac{+\tilde{h}_{nm}}{h_{nm}}$ . Ist das Verhältnis des geschatzten Übertragungsfaktors zum tatsächlichen Übertra-gungsfaktor

ein positiver Wert $\hat{h}_{nm} = +h_{nm}$, so ergibt sich für die zugehörige normierte Hypothese $\dfrac{\tilde{h}_{nm}}{h_{nm}}$ ein Wert von +1, und ist das Verhältnis ein negativer Wert $\hat{h}_{nm} = -h_{nm}$, so ergibt sich für die zugehörige normierte Hypothese $\dfrac{\tilde{h}_{nm}}{h_{nm}}$ ein Wert von -1. Die Vorzeichen der Verhältnisse der geschätzten Übertragungsfaktoren zu den tatsächlichen Übertragungsfaktoren werden folglich bei den Vorzeichen der zugehörigen normierten Hypothesen $\dfrac{\tilde{h}_{nm}}{h_{nm}}$ beibehalten und führen folglich auf eine der 8 Hypothesen-Kombinationen in der Tabelle der Fig. 5, die einen OFDM-Symbol des verwendeten Symbolalphabets zuordenbar ist.

In allen übrigen Fällen, wenn lediglich ein einziges Verhältnis positiv ist (d.h. $\hat{h}_{nm} = +h_{nm}$) und die übrigen drei Verhältnisse jeweils negativ sind (d.h. $\hat{h}_{nm} = -h_{nm}$) oder lediglich ein einziges Verhältnis negativ ist (d.h. $h_{nm} = -h_{nm}$) und die übrigen drei Verhältnisse jeweils positiv sind (d.h. $\hat{h}_{nm} = +h_{nm}$), wird der Hypothese $\tilde{h}_{nm}$ für einen einzigen Über-tragungsfaktor $h_{nm}$ ein negativer Schätzwert $-\hat{h}_{nm}$ für den Übertragungsfaktor $h_{nm}$ und den Hypothesen $\tilde{h}_{nm}$ für die übrigen drei Übertragungsfaktoren $h_{nm}$ jeweils ein positiver Schätzwert $+\hat{h}_{nm}$ für den Übertragungsfaktor $h_{nm}$ zugewiesen (siehe Zeilen 3 bis 10 in der Tabelle der Fig. 6).

Trifft die Hypothese $\tilde{h}_{nm}$ für den Übertragungsfaktor $h_{nm}$, der ein negativer Schätzwert $-\hat{h}_{nm}$ für den Übertra-gungsfaktor $h_{nm}$ zugewiesen wird, auf einen Schätzwert mit negativen Verhältnis (d.h. $\hat{h}_{nm} = -h_{nm}$), so ergibt sich für die

zugehörige normierte Hypothese $\dfrac{\tilde{h}_{nm}}{h_{nm}} = \dfrac{-\hat{h}_{nm}}{h_{nm}} = \dfrac{-(-h_{nm})}{h_{nm}} = +1$ ein Wert von +1, während für die übrigen tatsächlichen Übertragungsfaktoren $h_{nm}$, deren Verhältnisse demnach positiv sind (d.h. $\hat{h}_{nm} = +h_{nm}$), eine Hypothese $\tilde{h}_{nm}$ mit einem positiven Schätzwert $+\hat{h}_{nm}$ zugewiesen wird, die zu einer normierten Hypothese

$\dfrac{h_{nm}}{h_{nm}} = \dfrac{+\hat{h}_{nm}}{h_{nm}} = \dfrac{+|h_{nm}|}{h_{nm}} = +1$ führt. Somit wird durch diese Zuweisung der Hypothese $\tilde{h}_{nm}$ "künstlich" eine der ins-

gesamt 8 Hypothesen-Kombinationen in der Tabelle der Fig. 5 erzeugt, die einem OFDM-Symbol des verwendeten Symbolalphabets zuordenbar ist (exakt wird die Hypothesen-Kombination in Zeile 1 der Tabelle in Fig. 5 erzeugt).

Trifft die Hypothese $\tilde{h}_{nm}$ für den Übertragungsfaktor $h_{nm}$, der ein negativer Schätzwert $-\hat{h}_{nm}$ für den Übertragungsfaktor $h_{nm}$ zugewiesen wird, dagegen auf ein positives Verhältnis (d.h. $\hat{h}_{nm} = +h_{nm}$), so ergibt sich für die zugehörige

normierte Hypothese $\dfrac{h_{nm}}{h_{nm}} = \dfrac{-h_{nm}}{h_{nm}} = \dfrac{-h_{nm}}{h_{nm}} = -1$ ein Wert von -1, während für die übrigen tatsächlichen Übertragungsfaktoren $h_{nm}$ eine Hypothese $\tilde{h}_{nm}$ mit einem positiven Schätzwert $+\hat{h}_{nm}$ zugewiesen wird. Für die beiden tatsächlichen Übertragungsfaktoren $h_{nm}$, deren Verhältnisse positiv sind (d. h. $\hat{h}_{nm} = +h_{nm}$), ergibt sich die normierte Hypothese

$\dfrac{\tilde{h}_{nm}}{h_{nm}} = \dfrac{+\hat{h}_{nm}}{h_{nm}} = \dfrac{h_{nm}}{h_{nm}} = +1$ mit Wert +1, während sich für den einzigen tatsächlichen Übertragungsfaktor $h_{nm}$, deren

Verhältnis negativ ist (d.h. $\hat{h}_{nm} = -h_{nm}$), die normierte Hypothese $\dfrac{\overline{h}_{nm}}{h_{nm}} = \dfrac{+h_{nm}}{-|h_{nm}|} = \dfrac{+|h_{nm}|}{-|h_{nm}|} = -1$ mit Wert -1 ergibt.

Somit wird durch diese Zuweisung der Hypothese $\tilde{h}_{nm}$ "künstlich" eine der insgesamt 8 Hypothesen-Kombinationen in der Tabelle der Fig. 5 erzeugt, die einem OFDM-Symbol des verwendeten Symbolalphabets zuordenbar ist (exakt wird eine der Hypothesen-Kombinationen in Zeile 4, 6, 7, 10, 11 und 13 in der Tabelle in Fig. 5 erzeugt).

Analog wie in der ersten Ausführungsform der Erfindung in der Tabelle der Fig. 5 sind in der zweiten Ausführungsform der Erfindung für die Hypothesen $\tilde{v}_2$ bzw. $\tilde{v}_4$ der Koeffizienten $v_2$ bzw. $v_4$ jeweils die Werte +1 und -1 und für die Hypothesen $\tilde{v}_1$ bzw. $\tilde{v}_3$ der Koeffizienten $v_1$ bzw. $v_3$ jeweils der Wert +1 zuzuweisen, so dass in der zweiten Ausführungsform der Erfindung gemäß der Tabelle in Fig. 6 lediglich 10 Hypothesen-Kombinationen zu prüfen sind.

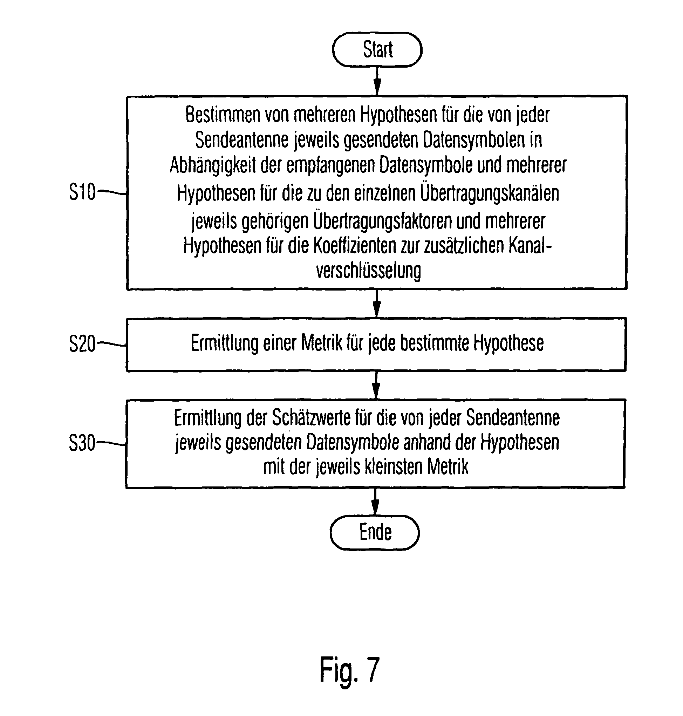

Im folgenden wird das erfindungsgemäße Verfahren zur Ermittlung von Schätzwerten für von vier Sendeantennen eines MIMO-OFDM-Übertragungssystems jeweils gesendete Datensymbolen anhand des Flussdiagrammes in Fig. 7 erläutert.

Im ersten Verfahrensschritt S10 wird in jedem OFDM-Symbol-Zeitpunkt vom Empfänger ausgehend von den im jeweiligen OFDM-Symbol-Zeitpunkt $l, l +1, l+2, l+3, \ldots$ von den beiden Empfangs-Antennen jeweils empfangenen OFDM-Symbolen $\vec{r}_{1-4}$ bzw. $\vec{r}_{5-8}$ Hypothesen $\vec{\tilde{s}}_{1-4}$ bzw. $\vec{\tilde{s}}_{5-8}$ für die im jeweiligen OFDM-Symbol-Zeitpunkt $l, l +1, l +2, l +3, \ldots$ gesendeten OFDM-Datensymbole $\vec{s}_{1-4}$ bzw. $\vec{s}_{5-8}$ gemäß Gleichung (10) bzw. (11) berechnet. Hierbei werden Hypothesen $\tilde{v}_1, \tilde{v}_2, \tilde{v}_3, \tilde{v}_4$ für die unbekannten Koeffizienten $v_1, v_2, v_3, v_4$ zur zusätzlichen Kanalverschlüsselung der gesendeten OFDM-Datensymbole $\vec{s}_{1-4}$ bzw. $\vec{s}_{5-8}$ im Rahmen der "Matrix-B"-Kodierung und Hypothesen $\tilde{h}_{n1}, \tilde{h}_{n2}, \tilde{h}_{n3}, \tilde{h}_{n4}$ für die Übertragungsfaktoren $h_{n1}, h_{n2}, h_{n3}, h_{n4}$ der einzelnen Teilkanäle zwischen den vier Sendeantennen $m$ und den mindestens zwei Empfangsantennen $n$ im Rahmen der insgesamt 32 Hypothesen-Kombinationen der ersten Ausführungsform der Erfindung in der Tabelle der Fig. 5 oder im Rahmen der lediglich 10 Hypothesen-Kombinationen der zweiten Ausführungsform der Erfindung in der Tabelle der Fig. 6 gewählt.

Im nächsten Verfahrensschritt S20 wird für jede der 32 bzw. 10 Hypothesen-Kombinationen jeweils eine Metrik berechnet. In einer ersten Variante wird gemäß Gleichung (14A) bzw. (14B) die Metrik als summierte euklidische Distanz zwischen den Hypothesen $\tilde{s}_i$ von jeweils vier gesendeten OFDM-Datensymbolen $s_i$ und den zugehörigen, im Konstellationsdiagramm nächstgelegenen OFDM-Daten-Symbolen des verwendeten Symbolalphabets ermittelt. In einer zweiten Variante wird gemäß Gleichung (15) die Metrik separat für jedes gesendete OFDM-Datensymbol $s_i$ als euklidische Distanz zwischen der Hypothese $s_i$ des jeweiligen gesendeten OFDM-Datensymbols $s_i$ und des zugehörigen, im Konstellationsdiagramm nächstgelegenen OFDM-Daten-Symbols des verwendeten Symbolalphabets ermittelt. Dabei ist es ausreichend, dass die Metrik gemäß Gleichung (15) nur für eines der vier gesendeten Datensymbole $s_1$ bis $s_4$ und nur für eines der vier gesendeten Datensymbole $s_5$ bis $s_8$ durchgeführt wird. Dieses hat den Vorteil, dass sich der Aufwand für die Berechnung der Metrik(en) auf ein Viertel verringert, während nachteilig eine verringerte Robustheit der Metrik vorliegt.

Im letzten Verfahrensschritt S30 wird schließlich die Hypothese $\tilde{s}_i$ des gesendeten OFDM-Datensymbole $s_i$ als Schätzwert $\hat{s}_i$ des gesendeten OFDM-Datensymbols $s_i$ gewählt, die jeweils die kleinste Metrik aufweist. Genau betrachtet muss nur eine der 8 Hypothesen-Kombinationen der Tabelle in Fig. 5 identifiziert werden, die zu OFDM-Datensymbolen des verwendeten Symbolalphabets gehören.

Die Erfindung ist durch die Ansprüche 1-12 definiert.

Von der Erfindung sind insbesondere auch MIMO-OFDM-Übertragungssysteme mit mehr als zwei Empfangsantennen abgedeckt.

**Patentansprüche**

1.  Verfahren zur Ermittlung von Schätzwerten $(\hat{\vec{s}}_{1\text{-}4}, \hat{\vec{s}}_{5\text{-}8})$ für von zumindest vier Sendeantennen eines MIMO-Übertragungssystems jeweils gesendete Datensymbole $(\vec{s}_{1\text{-}4}, \vec{s}_{5\text{-}8})$, die nach dem Matrix-B-Übertragungsmodus kodiert und mit Koeffizienten $(v_i)$ gewichtet sind, mit folgenden Verfahrensschritten:

    • Bestimmen von Hypothesen einer Schätzung $(\tilde{\vec{s}}_{1\text{-}4}, \tilde{\vec{s}}_{5\text{-}8})$ für die gesendeten Datensymbole $(\vec{s}_{1\text{-}4}, \vec{s}_{5\text{-}8})$ aus von mindestens zwei Empfangsantennen jeweils empfangenen Datensymbolen $(\vec{r}_{1\text{-}4}, \vec{r}_{5\text{-}8})$, die mit Hypothesen $(\tilde{h}_{nm})$ für die zu jeweils einem Teil-Übertragungskanal zwischen jeweils einer Sendeantenne $m$ und jeweils einer Empfangsantenne n gehörigen Übertragungsfaktoren $(h_{nm})$ und mit Hypothesen $(\tilde{v}_1)$ für die Koeffizienten $(v_i)$ gewichtet werden,

    • Ermitteln einer Metrik für jede zu mindestens einem gesendeten Datensymbol $(\vec{s}_{1\text{-}4}, \vec{s}_{5\text{-}8})$ jeweils gehörige Hypothese $(\tilde{\vec{s}}_{1\text{-}4}, \tilde{\vec{s}}_{5\text{-}8})$ und

    • Bestimmen des Schätzwerts $(\hat{\vec{s}}_{1\text{-}4}, \hat{\vec{s}}_{5\text{-}8})$ für das jeweilige gesendete Datensymbol $(\vec{s}_{1\text{-}4}, \vec{s}_{5\text{-}8})$ aus der kleinsten, zu jeweils einer Hypothese $(\tilde{\vec{s}}_{1\text{-}4}, \tilde{\vec{s}}_{5\text{-}8})$ gehörigen Metrik,

    **dadurch gekennzeichnet,**
    **dass** für die Hypothesen $(\tilde{h}_{nm})$ der zu den einzelnen Übertragungskanälen jeweils gehörigen Übertragungsfaktoren $(h_{nm})$ der jeweils positive und negative Wert $(+h_{nm}, -h_{nm})$ des jeweils vorzeichenlos ermittelbaren Übertragungsfaktors $(h_{nm})$ zugelassen sind, wobei die Übertragungsfaktoren $(h_{nm})$ der Übertragungskanäle, die von einer gemeinsamen Sendeantenne ausgehen, hinsichtlich des Vorzeichens identisch sind.

2.  Verfahren nach Anspruch 1,
    **dadurch gekennzeichnet,**
    **dass** die Metrik als euklidische Distanz zwischen einer zu mindestens einem gesendeten Datensymbol $(\vec{s}_{1\text{-}4}, \vec{s}_{5\text{-}8})$ jeweils gehörigen Hypothese $(\tilde{\vec{s}}_{1\text{-}4}, \tilde{\vec{s}}_{5\text{-}8})$ und dem zugehörigen, im Konstellationsdiagramm am nächsten gelegenen Datensymbol $(d_i)$ des Symbolalphabets gebildet wird.

3.  Verfahren nach Anspruch 1 oder 2,
    **dadurch gekennzeichnet,**
    **dass** für das von jeder Sendeantenne in einem Symbol-Zeitpunkt jeweils gesendete Datensymbol jeweils separat eine Metrik berechnet wird.

4.  Verfahren nach Anspruch 3,
    **dadurch gekennzeichnet,**
    **dass** nur eines, zwei oder drei der vier gesendeten Datensymbole $(\vec{s}_{1\text{-}4}, \vec{s}_{5\text{-}8})$ mittels einer Metrik geschätzt werden.

5.  Verfahren nach Anspruch 1 oder 2,

**dadurch gekennzeichnet,**
**dass** für die von allen Sendeantennen in einem OFDM-Symbol-Zeitpunkt jeweils gesendeten Datensymbole ($\vec{s}_{1\text{-}4}$, $\vec{s}_{5\text{-}8}$) eine gemeinsame Metrik berechnet wird.

6. Verfahren nach einem der Ansprüche 1 bis 5,
   **dadurch gekennzeichnet,**
   **dass** für die Koeffizienten ($v_i$) und somit für die zu den einzelnen Koeffizienten ($v_i$) aufgestellten Hypothesen ($\tilde{v}_1$) jeweils die Werte +1 und -1 zugelassen sind.

7. Verfahren nach Anspruch 6,
   **dadurch gekennzeichnet,**
   **dass** für die Hypothesen ($\tilde{v}_1$) für die Koeffizienten ($v_i$) zur Gewichtung jedes zweiten gesendeten Datensymbols ($\vec{s}_{1\text{-}4}$, $\vec{s}_{5\text{-}8}$) jeweils nur der Wert +1 oder nur der Wert -1 vorgesehen sind.

8. Verfahren nach Anspruch 7,
   **dadurch gekennzeichnet,**
   **dass** entweder für die Hypothesen ($\tilde{h}_{nm}$) aller zu den einzelnen Teil-Übertragungskanälen jeweils gehörigen Übertragungsfaktoren ($h_{nm}$) ein positiver Wert des zugehörigen ermittelbaren Übertragungsfaktors ($h_{nm}$) vorgesehen ist oder jeweils nur für die Hypothese ($\tilde{h}_{nm}$) eines einzigen der zu den einzelnen Teil-Übertragungskanälen jeweils gehörigen Übertragungsfaktoren ($h_{nm}$) ein negative Wert des zugehörigen ermittelbaren Übertragungsfaktors ($h_{nm}$) vorzusehen ist.

9. Verfahren nach einem der Ansprüche 1 bis 8,
   **dadurch gekennzeichnet,**
   **dass** die Hypothesen ($\tilde{h}_{nm}$) für die zu den einzelnen Teil-Übertragungskanälen jeweils gehörigen Übertragungsfaktoren ($h_{nm}$) jeweils einzig nur in einem Subträger und nur in einem OFDM-Symbol-Zeitpunkt des jeweiligen Teil-Übertragungskanals zu ermitteln sind.

10. Vorrichtung zur Ermittlung von Schätzwerten $(\hat{\vec{s}}_{1\text{-}4}, \hat{\vec{s}}_{5\text{-}8})$ für von zumindest vier Sendeantennen eines MIMO-Übertragungssystems jeweils gesendete Datensymbole ($\vec{s}_{1\text{-}4}$, $\vec{s}_{5\text{-}8}$), die nach dem Matrix-B-Übertragungsmodus kodiert und mit Koeffizienten ($v_i$) gewichtet sind, mit einem Prozessor, der ein Verfahren zur Ermittlung von Schätzwerten nach einem der Ansprüche 1 bis 9 durchführt.

11. Digitales Speichermedium mit elektronisch auslesbaren Steuersignalen, welche derart mit einem programmierbaren Computer oder digitalen Signalprozessor zusammenwirken können, dass ein Verfahren nach einem der Ansprüche 1 bis 9 ausgeführt wird.

12. Computerprogramm mit Programmcode-Mitteln zur Durchführung eines Verfahrens nach einem der Ansprüche 1 bis 9, wenn das Computerprogramm in einem Computer oder einem digitalen Signalprozessor ausgeführt wird.


**Claims**

1. Method for determining estimated values $(\hat{\vec{s}}_{1\text{-}4}, \hat{\vec{s}}_{5\text{-}8})$ for data symbols ($\vec{s}_{1\text{-}4}$, $\vec{s}_{5\text{-}8}$) which are respectively transmitted from at least four transmitting antennas of a MIMO transmission system, are encoded according to the matrix B transmission mode, and are weighted with coefficients ($v_i$), having the following method steps:

   • determining hypotheses of an estimate $(\hat{\vec{s}}_{1\text{-}4}, \hat{\vec{s}}_{5\text{-}8})$ for the transmitted data symbols ($\vec{s}_{1\text{-}4}$, $\vec{s}_{5\text{-}8}$) from data symbols ($\vec{r}_{1\text{-}4}$, $\vec{r}_{5\text{-}8}$), which are respectively received from at least two receiving antennas and are weighted with hypotheses ($\tilde{h}_{nm}$) for the transmission factors ($h_{nm}$) respectively associated with a partial transmission channel between in each case a transmitting antenna $m$ and in each case a receiving antenna $n$, and with hypotheses ($\tilde{v}_1$) for the coefficients ($v_i$),

   • determining a metric for each hypothesis $(\hat{\vec{s}}_{1\text{-}4}, \hat{\vec{s}}_{5\text{-}8})$ respectively associated with at least one transmitted

data symbol ($\vec{s}_{1-4}$, $\vec{s}_{5-8}$), and

• determining the estimated value $(\hat{\vec{s}}_{1-4}, \hat{\vec{s}}_{5-8})$ for the respective transmitted data symbol ($\vec{s}_{1-4}$, $\vec{s}_{5-8}$) from

the smallest metric respectively associated with a hypothesis $(\tilde{\vec{s}}_{1-4}, \tilde{\vec{s}}_{5-8})$,

**characterized**
**in that** the respectively positive and negative values ($+h_{nm}$, $-h_{nm}$) of the transmission factor ($h_{nm}$) respectively determinable without sign are permitted for the hypotheses ($\tilde{h}_{nm}$) of the transmission factors ($h_{nm}$) respectively associated with the individual transmission channels, the transmission factors ($h_{nm}$) of the transmission channels which emanate from a common transmitting antenna being identical with regard to sign.

2. Method according to Claim 1, **characterized in that** the metric is formed as a Euclidian distance between a hypothesis $(\tilde{\vec{s}}_{1-4}, \tilde{\vec{s}}_{5-8})$ respectively associated with at least one transmitted data symbol ($\vec{s}_{1-4}$, $\vec{s}_{5-8}$), and the associated data symbol ($d_i$) of the symbol alphabet situated closest in the constellation diagram.

3. Method according to Claim 1 or 2, **characterized in that** a metric is respectively separately calculated for the data symbol respectively transmitted from each transmitting antenna at a symbol timing point.

4. Method according to Claim 3, **characterized in that** only one, two or three of the four transmitted data symbols ($\vec{s}_{1-4}$, $\vec{s}_{5-8}$) essentially are estimated by means of a metric.

5. Method according to Claim 1 or 2, **characterized in that** a common metric is calculated for the data symbols ($\vec{s}_{1-4}$, $\vec{s}_{5-8}$) respectively transmitted from all transmitting antennas at an OFDM symbol timing point.

6. Method according to one of Claims 1 to 5, **characterized in that** the values +1 and -1 are respectively permitted for the coefficients ($v_i$), and thus for the hypotheses ($\tilde{v}_1$) established in relation to the individual coefficients ($v_i$).

7. Method according to Claim 6, **characterized in that** respectively only the value +1 or only the value -1 is provided for the hypotheses ($\tilde{v}_1$) for the coefficients ($v_i$) for the weighting of each second transmitted data symbol ($\vec{s}_{1-4}$, $\vec{s}_{5-8}$).

8. Method according to Claim 7, **characterized in that** either a positive value of the associated determinable transmission factor ($h_{nm}$) is provided for the hypotheses ($\tilde{h}_{nm}$) of all of the transmission factors ($h_{nm}$) respectively associated with the individual partial transmission channels, or respectively a negative value of the associated determinable transmission factor ($h_{nm}$) is to be provided only for the hypothesis ($\tilde{h}_{nm}$) of an individual one of the transmission factors ($h_{nm}$) respectively associated with the individual partial transmission channels.

9. Method according to one of Claims 1 to 8, **characterized in that** the hypotheses ($\tilde{h}_{nm}$) for the transmission factors ($h_{nm}$) respectively associated with the individual partial transmission channels are respectively to be determined individually only in a subcarrier and only at an OFDM symbol timing point of the respective partial transmission channel.

10. Device for determining estimated values $(\hat{\vec{s}}_{1-4}, \hat{\vec{s}}_{5-8})$ for data symbols ($\vec{s}_{1-4}$, $\vec{s}_{5-8}$) which are respectively transmitted from at least four transmitting antennas of a MIMO transmission system, are encoded according to the matrix B transmission mode, and are weighted with coefficients ($v_i$), having a processor which carries out a method for determining estimated values according to one of Claims 1 to 9.

11. Digital storage medium with electronically readable control signals which can cooperate with a programmable computer or digital signal processor in such a way that a method according to one of Claims 1 to 9 is executed.

12. Computer program with program code means for carrying out a method according to one of Claims 1 to 9 when the computer program is executed in a computer or a digital signal processor.

**Revendications**

1. Procédé de détermination de valeurs d'évaluation $\left(\bar{\bar{s}}_{1-4}, \bar{\bar{s}}_{5-8}\right)$ pour des symboles de données $(\bar{s}_{1-4}, \bar{s}_{5-8})$ émis respectivement par au moins quatre antennes d'émission d'un système de transmission MIMO, qui sont codés selon le mode de transmission en matrice B et pondérés par des coefficients ($v_i$), comprenant les étapes de procédé suivantes :

   • détermination d'hypothèses d'une évaluation $(\bar{s}_{1-4}, \bar{s}_{5-8})$ pour les symboles de données $(\bar{s}_{1-4}, \bar{s}_{5-8})$ émis, à partir de symboles de données $(\bar{r}_{1-4}, \bar{r}_{5-8})$ reçus respectivement d'au moins deux antennes de réception, et qui sont pondérés par des hypothèses $(\tilde{h}_{nm})$ pour des facteurs de transmission ($h_{nm}$) associés respectivement à un canal de transmission partiel entre respectivement une antenne d'émission m et respectivement une antenne de réception n, et par des hypothèses $(\tilde{v}_1)$ pour les coefficients ($v_i$),

   • élaboration d'une métrique pour chaque hypothèse $\left(\bar{\bar{s}}_{1-4}, \bar{\bar{s}}_{5-8}\right)$ associée respectivement à au moins un symbole de données $(\vec{s}_{1-4}, \vec{s}_{5-8})$, émis, et

   • détermination de la valeur d'évaluation $\left(\bar{\bar{s}}_{1-4}, \bar{\bar{s}}_{5-8}\right)$ pour le symbole de données $(\vec{s}_{1-4}, \vec{s}_{5-8})$ respectivement émis, à partir de la plus petite métrique associée respectivement à une hypothèse $\left(\bar{\bar{s}}_{1-4}, \bar{\bar{s}}_{5-8}\right)$,

   **caractérisé en ce que** pour les hypothèses $(\tilde{h}_{nm})$ des facteurs de transmission ($h_{nm}$) associés respectivement aux canaux de transmission individuels, on admet respectivement la valeur positive et la valeur négative ($+h_m$, $-h_m$) du facteur de transmission ($h_{nm}$) pouvant être déterminé respectivement sans signe, les facteurs de transmission ($h_{nm}$) des canaux de transmission, qui sont issus d'une antenne d'émission commune, étant identiques quant au signe.

2. Procédé selon la revendication 1,
   **caractérisé en ce que** la métrique est formée en tant que distance euclidienne entre une hypothèse $\left(\bar{\bar{s}}_{1-4}, \bar{\bar{s}}_{5-8}\right)$ associée respectivement à au moins un symbole de données $(\vec{s}_{1-4}, \vec{s}_{5-8})$ émis, et le symbole de données ($d_i$) associé de l'alphabet des symboles, qui se situe le plus près dans le diagramme de constellation.

3. Procédé selon la revendication 1 ou la revendication 2,
   **caractérisé en ce que** l'on calcule respectivement de manière séparée une métrique pour le symbole de données émis respectivement par chaque antenne d'émission à un instant de symbole.

4. Procédé selon la revendication 3,
   **caractérisé en ce que** l'on évalue seulement un, deux ou trois des quatre symboles de données émis $(\vec{s}_{1-4}, \vec{s}_{5-8})$, au moyen d'une métrique.

5. Procédé selon la revendication 1 ou la revendication 2,
   **caractérisé en ce que** l'on calcule une métrique commune pour les symboles de données $(\bar{s}_{1-4}, \bar{s}_{5-8})$ émis respectivement par toutes les antennes d'émission à un instant de symbole OFDM.

6. Procédé selon l'une des revendications 1 à 5,
   **caractérisé en ce que** l'on admet pour les coefficients ($v_i$), et ainsi pour les hypothèses $(\tilde{v}_1)$ établies pour les coefficients ($v_i$) individuels, respectivement les valeurs +1 et -1.

7. Procédé selon la revendication 6,
   **caractérisé en ce que** pour les hypothèses $(\tilde{v}_i)$ pour les coefficients ($v_i$) destinés à pondérer chaque deuxième symbole de données $(\vec{s}_{1-4}, \vec{s}_{5-8})$ émis, sont prévues respectivement uniquement la valeur +1 ou uniquement la valeur -1.

8. Procédé selon la revendication 7,
   **caractérisé en ce que**, soit l'on prévoit pour les hypothèses $(\tilde{h}_{nm})$ de tous les facteurs de transmission ($h_{nm}$) respectivement associés aux canaux de transmission partiels individuels, une valeur positive du facteur de transmission ($h_{nm}$) associé pouvant être déterminé, soit il faut respectivement prévoir uniquement pour l'hypothèse $(\tilde{h}_{nm})$

d'un seul des facteurs de transmission ($h_{nm}$) respectivement associés aux canaux de transmission partiels individuels, une valeur négative du facteur de transmission ($h_{nm}$) associé pouvant être déterminé.

9. Procédé selon l'une des revendications 1 à 8,
**caractérisé en ce que** les hypothèses ($h_{nm}$) pour les facteurs de transmission ($h_{nm}$) respectivement associés aux canaux de transmission partiels individuels, doivent respectivement être déterminées individuellement uniquement dans une sous-porteuse et uniquement à un instant de symbole OFDM du canal de transmission partiel respectif.

10. Dispositif de détermination de valeurs d'évaluation $\left( \vec{\bar{s}}_{1-4} \,,\; \vec{\bar{s}}_{5-8} \right)$ pour des symboles de données $(\vec{s}_{1\text{-}4}, \vec{s}_{5\text{-}8})$ émis respectivement par au moins quatre antennes d'émission d'un système de transmission MIMO, qui sont codés selon le mode de transmission en matrice B et pondérés par des coefficients ($v_i$), comprenant un processeur qui met en oeuvre un procédé de détermination de valeurs d'évaluation selon l'une des revendications 1 à 9.

11. Unité de mémoire ou de stockage de données numérique, à signaux de commande pouvant être lus par voie électronique, qui peuvent coopérer avec un ordinateur programmable ou un processeur de traitement de signal numérique de façon à exécuter un procédé selon l'une des revendications 1 à 9.

12. Programme d'ordinateur comprenant des moyens de codes de programme pour la mise en oeuvre d'un procédé selon l'une des revendications 1 à 9, lorsque le programme d'ordinateur est exécuté dans un ordinateur ou un processeur de traitement de signal numérique.

| Sendeantenne m | OFDM - Symbol-Zeitpunkt | | | |
|---|---|---|---|---|
| | $I$ | $I+1$ | $I+2$ | $I+3$ |
| 1 | $s_1$ | $-(s_2)^*$ | $s_5$ | $-(s_7)^*$ |
| 2 | $s_2$ | $(s_1)^*$ | $s_6$ | $-(s_8)^*$ |
| 3 | $s_3$ | $-(s_4)^*$ | $s_7$ | $(s_5)^*$ |
| 4 | $s_4$ | $(s_3)^*$ | $s_8$ | $(s_6)^*$ |

## Fig. 1

| Sendeantenne m | OFDM - Symbol-Zeitpunkt | | | |
|---|---|---|---|---|
| | $I$ | $I+1$ | $I+2$ | $I+3$ |
| 1 | $v_1 s_1$ | $-v_2 (s_2)^*$ | $v_3 s_5$ | $-v_4 (s_7)^*$ |
| 2 | $v_1 s_2$ | $v_2 (s_1)^*$ | $v_3 s_6$ | $-v_4 (s_8)^*$ |
| 3 | $v_1 s_3$ | $-v_2 (s_4)^*$ | $v_3 s_7$ | $v_4 (s_5)^*$ |
| 4 | $v_1 s_4$ | $v_2 (s_3)^*$ | $v_3 s_8$ | $v_4 (s_6)^*$ |

## Fig. 2

**Fig. 3**

**Fig. 4**

| Hypothesen-Kombination Nummer | Hypothesen | | | | | | Geschätzte Sendesymbole | | | | | | | |
|---|---|---|---|---|---|---|---|---|---|---|---|---|---|---|
| | $\tilde{v}_1 \cdot v_1$ bzw. $\tilde{v}_3 \cdot v_3$ | $\tilde{v}_2 \cdot v_2$ bzw. $\tilde{v}_4 \cdot v_4$ | $\tilde{h}_{n1}/h_{n1}$ | $\tilde{h}_{n2}/h_{n2}$ | $\tilde{h}_{n3}/h_{n3}$ | $\tilde{h}_{n4}/h_{n4}$ | $\tilde{s}_1$ | $\tilde{s}_2$ | $\tilde{s}_3$ | $\tilde{s}_4$ | $\tilde{s}_5$ | $\tilde{s}_6$ | $\tilde{s}_7$ | $\tilde{s}_8$ |
| 1. / 2. | +1 | +1 / -1 | 1 | 1 | 1 | 1 | $s_1$ | $s_2$ | $s_3$ | $s_4$ | $s_5$ | $s_6$ | $s_7$ | $s_8$ |
| 3. / 4. | +1 | +1 / -1 | 1 | 1 | 1 | -1 | | | | | | | | |
| 5. / 6. | +1 | +1 / -1 | 1 | 1 | -1 | 1 | | | | | | | | |
| 7. / 8. | +1 | +1 / -1 | 1 | 1 | -1 | -1 | $s_1$ | $s_2$ | $-s_3$ | $-s_4$ | $s_5$ | $s_6$ | $-s_7$ | $-s_8$ |
| 9. / 10. | +1 | +1 / -1 | 1 | -1 | 1 | 1 | | | | | | | | |
| 11. / 12. | +1 | +1 / -1 | 1 | -1 | 1 | -1 | $s_1$ | $-s_2$ | $s_3$ | $-s_4$ | $s_5$ | $-s_6$ | $s_7$ | $-s_8$ |
| 13. / 14. | +1 | +1 / -1 | 1 | -1 | -1 | 1 | $s_1$ | $-s_2$ | $-s_3$ | $s_4$ | $s_5$ | $-s_6$ | $-s_7$ | $s_8$ |
| 15. / 16. | +1 | +1 / -1 | 1 | -1 | -1 | -1 | | | | | | | | |
| 17. / 18. | +1 | +1 / -1 | -1 | 1 | 1 | 1 | | | | | | | | |
| 19. / 20. | +1 | +1 / -1 | -1 | 1 | 1 | -1 | $-s_1$ | $s_2$ | $s_3$ | $-s_4$ | $-s_5$ | $s_6$ | $s_7$ | $-s_8$ |
| 21. / 22. | +1 | +1 / -1 | -1 | 1 | -1 | 1 | $-s_1$ | $s_2$ | $-s_3$ | $s_4$ | $-s_5$ | $s_6$ | $-s_7$ | $s_8$ |
| 23. / 24. | +1 | +1 / -1 | -1 | 1 | -1 | -1 | | | | | | | | |
| 25. / 26. | +1 | +1 / -1 | -1 | -1 | 1 | 1 | $-s_1$ | $-s_2$ | $s_3$ | $s_4$ | $-s_5$ | $-s_6$ | $s_7$ | $s_8$ |
| 27. / 28. | +1 | +1 / -1 | -1 | -1 | 1 | -1 | | | | | | | | |
| 29. / 30. | +1 | +1 / -1 | -1 | -1 | -1 | 1 | | | | | | | | |
| 31. / 32. | +1 | +1 / -1 | -1 | -1 | -1 | -1 | $-s_1$ | $-s_2$ | $-s_3$ | $-s_4$ | $-s_5$ | $-s_6$ | $-s_7$ | $-s_8$ |

Fig. 5

EP 2 428 009 B1

| $\tilde{v}_1$ bzw. $\tilde{v}_3$ | $\tilde{v}_2$ bzw. $\tilde{v}_4$ | $\tilde{h}_{n1}$ | $\tilde{h}_{n2}$ | $\tilde{h}_{n3}$ | $\tilde{h}_{n4}$ |
|:---:|:---:|:---:|:---:|:---:|:---:|
| +1 | +1 | $=+\hat{h}_{n1}$ | $=+\hat{h}_{n2}$ | $=+\hat{h}_{n3}$ | $=+\hat{h}_{n4}$ |
| +1 | -1 | $=+\hat{h}_{n1}$ | $=+\hat{h}_{n2}$ | $=+\hat{h}_{n3}$ | $=+\hat{h}_{n4}$ |
| +1 | +1 | $=-\hat{h}_{n1}$ | $=+\hat{h}_{n2}$ | $=+\hat{h}_{n3}$ | $=+\hat{h}_{n4}$ |
| +1 | -1 | $=-\hat{h}_{n1}$ | $=+\hat{h}_{n2}$ | $=+\hat{h}_{n3}$ | $=+\hat{h}_{n4}$ |
| +1 | +1 | $=+\hat{h}_{n1}$ | $=-\hat{h}_{n2}$ | $=+\hat{h}_{n3}$ | $=+\hat{h}_{n4}$ |
| +1 | -1 | $=+\hat{h}_{n1}$ | $=-\hat{h}_{n2}$ | $=+\hat{h}_{n3}$ | $=+\hat{h}_{n4}$ |
| +1 | +1 | $=+\hat{h}_{n1}$ | $=+\hat{h}_{n2}$ | $=-\hat{h}_{n3}$ | $=+\hat{h}_{n4}$ |
| +1 | -1 | $=+\hat{h}_{n1}$ | $=+\hat{h}_{n2}$ | $=-\hat{h}_{n3}$ | $=+\hat{h}_{n4}$ |
| +1 | +1 | $=+\hat{h}_{n1}$ | $=+\hat{h}_{n2}$ | $=+\hat{h}_{n3}$ | $=-\hat{h}_{n4}$ |
| +1 | -1 | $=+\hat{h}_{n1}$ | $=+\hat{h}_{n2}$ | $=+\hat{h}_{n3}$ | $=-\hat{h}_{n4}$ |

Fig. 6

Start

S10 — Bestimmen von mehreren Hypothesen für die von jeder Sendeantenne jeweils gesendeten Datensymbolen in Abhängigkeit der empfangenen Datensymbole und mehrerer Hypothesen für die zu den einzelnen Übertragungskanälen jeweils gehörigen Übertragungsfaktoren und mehrerer Hypothesen für die Koeffizienten zur zusätzlichen Kanalverschlüsselung

S20 — Ermittlung einer Metrik für jede bestimmte Hypothese

S30 — Ermittlung der Schätzwerte für die von jeder Sendeantenne jeweils gesendeten Datensymbole anhand der Hypothesen mit der jeweils kleinsten Metrik

Ende

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080063103 A1

- WO 2008010740 A